# EUROPEAN PATENT SPECIFICATION

(11) **EP 3 473 663 B1**
(45) Date of publication and mention of the grant of the patent: **25.12.2019**
(21) Application number: 18198857.7
(22) Date of filing: 05.10.2018
(51) Int. Cl.: C08G 77/62, C09D 5/16, C09D 183/16, C08G 77/06, C08G 77/22

(54) **POLYSILAZANE COMPOUND, MAKING METHOD, WATER REPELLENT TREATMENT AGENT, AND WATER REPELLENT TREATMENT METHOD**
POLYSILAZANVERBINDUNG, HERSTELLUNGSVERFAHREN, WASSERABWEISENDES BEHANDLUNGSMITTEL UND WASSERABWEISENDES BEHANDLUNGSVERFAHREN
COMPOSÉ POLYSILAZANE, SON PROCÉDÉ DE FABRICATION, AGENT DE TRAITEMENT HYDROFUGE ET PROCÉDÉ DE TRAITEMENT HYDROFUGE

(30) Priority: 18.10.2017 JP 2017201841
(43) Date of publication of application: 24.04.2019
(73) Proprietor: Shin-Etsu Chemical Co., Ltd., Tokyo (JP)
(72) Inventor: KAWAKAMI, Masato, Joetsu-shi, Niigata (JP); AOKI, Shotaro, Joetsu-shi, Niigata (JP); KIYOMORI, Ayumu, Joetsu-shi, Niigata (JP); KUBOTA, Tohru, Joetsu-shi, Niigata (JP)
(74) Representative: Ter Meer Steinmeister & Partner

(56) References cited:
- EP-A1- 3 018 181
- CN-A- 106 432 738
- US-A- 4 255 549

## Description

### CROSS-REFERENCE TO RELATED APPLICATION

### TECHNICAL FIELD

This invention relates to a polysilazane compound which is useful in water repellent treatment, a method for preparing the same, a water repellent agent comprising the same, and a water repellent treatment method.

### BACKGROUND ART

Polysilazane compounds are a group of compounds which are obtained by ammonolysis polymerization of a chlorosilane compound having at least two chlorine atoms in the molecule. Among the polysilazane compounds, inorganic polysilazanes obtained from dichlorosilane (H₂SiCl₂) are widely used (Patent Documents 1 and 2). When such polysilazane compounds are used in surface treatment, there is formed a coating of an inorganic polysilazane, which exhibits glass-like properties, that is, hydrophilicity.

Polysilazane compounds are composed of highly reactive Si-N bonds, which are converted to more stable Si-O bonds under the impetus of air-borne moisture or alcohol. Condensation is then repeated to build up a coating. On use of highly reactive polysilazane compounds, surface treatment is performed simply by coating. They are particularly effective to substrates having reactive OH groups such as glass and metals.

### Citation List

Patent Document 1: JP-A 2004-155834
Patent Document 2: WO 2002/088269

### SUMMARY OF INVENTION

The inorganic polysilazane compounds described in Patent Documents 1 and 2 are effective for rendering the treated surface hydrophilic. However, they fail to render the treated surface hydrophobic to confer water repellency thereto because their coating exhibits glass-like properties.

Since water repellent treatment is not achievable with the inorganic polysilazanes, alkylalkoxysilane compounds such as decyltrimethoxysilane are typically used as a water repellent agent for the surface treatment of glass. Treatment of a glass surface with such compounds imparts water repellency, due to the alkyl group, to the glass surface.

When an alkylalkoxysilane compound is used as a water repellent agent, it is necessary to create highly reactive silanol via hydrolysis of the alkoxysilyl group. This means that a hydrolytic solution of the alkylalkoxysilane compound must be prepared on every treatment, raising the problem that more steps are needed as compared with the use of polysilazane compounds.

When the alkylalkoxysilane compound is used for water repellent treatment, the water contact angle is large, but the angle at which a droplet starts sliding (i.e., water sliding angle) is also undesirably large. The use of an alkylalkoxysilane compound having a longer alkyl group is sometimes effective for improving the water sliding angle. In general, the longer the alkyl group, the hydrolysis step takes the longer time, indicating a further lowering of efficiency. Moreover, the long alkyl group may often cause formation of insoluble gel, interfering with satisfactory treatment.

Patent EP 3 018 181 A describes a coating composition suitable for the preparation of a coating exhibiting good corrosion resistance, anti-fouling properties and high transparency wherein the composition comprises a polysilazane having (a) an alkoxy-modified silane group in the side chain, (b) a non-reactive polydialkylsiloxane and (c) a reactive polydialkylsiloxane. The alkyl silyloxy group is positioned on the side chain of the polysilazane and on the N atom. The polysilazane may further contain a co-silazane unit - [Si(R)2-NH]-.

Patent CN 106432738 A relates to a polysilazane used for the preparation of low dielectric oil resistance composite material characterised by hydrophobicity properties due to the presence of fluorine-containing group on the side-chain of the polysilazane and wherein the fluorine-containing group is on the Si atom of the polysilazane. The polysilazane is prepared by ammonolysis reaction of at least one chlorosilane containing fluorine groups.

Finally, patent US 4 255 549 A is related to a process for the preparation of an organopolysilazane used for the preparation of films wherein the films are characterised by water repellency. The organopolysilazane is prepared by ammonolysis of an alkyl trichlorosilane and a dialkyl dichlorosilane. The resulting polysilazane formed has an alkyl side chain on the Si atom of the polysilazane.

An object of the invention is to provide a polysilazane compound which allows for simple treatment equivalent to inorganic polysilazanes, has water repellency at least comparable to alkylalkoxysilane compounds and is good in water sliding property, a method for preparing the same, a water repellent agent comprising the same, and a water repellent treatment method.

The inventors have found that a polysilazane compound having a siloxysilyl structure can be applied by a simple treatment method and exhibits a large water contact angle and good water sliding property.

In one aspect, the invention provides a polysilazane compound comprising recurring units of the general formula (1) and having a number average molecular weight of 1,000 to 200,000 as measured by gel permeation chromatography versus polystyrene standards. 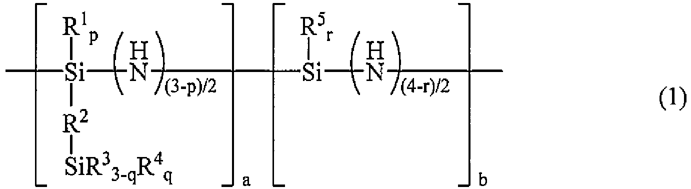 Herein R¹, R³ and R⁵ are each independently a substituted or unsubstituted C₁-C₂₀ monovalent hydrocarbon group which may contain a heteroatom. R² is a substituted or unsubstituted C₂-C₂₀ divalent hydrocarbon group which may contain a heteroatom. R⁴ is an organosiloxane-containing group of the general formula (2):

-O-Si(R⁶)ₓ[(OSi(R⁶)₂)_{y}OSi(R⁶)₃]₍₃₋ₓ₎ (2)

wherein R⁶ is each independently a C₁-C₁₀ monovalent hydrocarbon group which may be substituted with halogen, x is 0, 1, 2 or 3, a plurality of OSiR⁶₃ groups may undergo siloxane-eliminating condensation to form a cyclic siloxane when x is 0 or 1, and y is an integer of 0 to 30. In formula (1), p is 0 or 1, q is 1, 2 or 3, r is 0, 1, 2 or 3, a is a number from more than 0 to 1, b is a number from 0 to 1, and a+b is equal to 1.

In a second aspect, the invention provides a method for preparing the polysilazane compound defined above, comprising
the step of effecting ammonolysis polymerization of a chlorosilane compound having the general formula (3) alone: 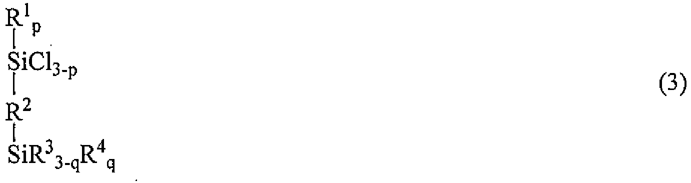 wherein R¹ to R⁴, p and q are as defined above, or
the steps of mixing a chlorosilane compound having the above formula (3) with a chlorosilane compound having the general formula (4): 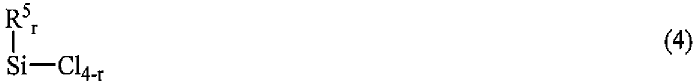 wherein R⁵ and r are as defined above, and effecting ammonolysis polymerization thereof.

The method may further include the steps of adding an alkaline aqueous solution after the ammonolysis polymerization and effecting separatory operation.

In a third aspect, the invention provides a water repellent agent comprising the polysilazane compound defined above. The water repellent agent may further comprise a solvent and/or a catalyst.

In a fourth aspect, the invention provides a water repellent treatment method comprising the step of applying the water repellent agent defined above to a member to treat its surface. Specifically, the applying step includes coating, contacting or mixing.

### ADVANTAGEOUS EFFECTS OF INVENTION

When the polysilazane compound is used for water repellent treatment, it dispenses with preparation of a hydrolytic solution as required for alkylalkoxysilane compounds because its polysilazane moiety is highly reactive. Thus the water repellent treatment is performed by simple operation. Moreover, the polysilazane compound not only imparts water repellency, but also significantly improves water sliding property due to the terminal siloxane structure.

### DESCRIPTION OF PREFERRED EMBODIMENTS

As used herein, the notation (Cn-Cm) means a group containing from n to m carbon atoms per group.

The invention provides a polysilazane compound comprising recurring units of the general formula (1) and having a number average molecular weight of 1,000 to 200,000 as measured by gel permeation chromatography (GPC) versus polystyrene standards.

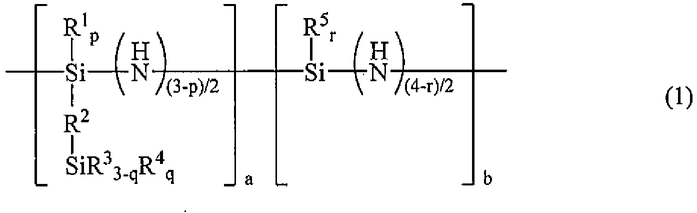

In formula (1), R¹, R³ and R⁵ are each independently a substituted or unsubstituted monovalent hydrocarbon group of 1 to 20 carbon atoms, preferably 1 to 10 carbon atoms which may contain a heteroatom. The C₁-C₂₀ monovalent hydrocarbon group may be straight, branched or cyclic. Examples include straight alkyl groups such as methyl, ethyl, propyl, butyl, pentyl, hexyl, heptyl, octyl, decyl, dodecyl, tetradecyl, hexadecyl, octadecyl and eicosyl; branched alkyl groups such as isopropyl, isobutyl, sec-butyl, tert-butyl, neopentyl, thexyl and 2-ethylhexyl; cyclic alkyl groups such as cyclopentyl and cyclohexyl; alkenyl groups such as allyl, propenyl, butenyl and pentenyl; aryl groups such as phenyl and tolyl; and aralkyl groups such as benzyl and phenethyl.

The monovalent hydrocarbon groups may have one or more heteroatoms intervening in the molecular chain, such as ether (-O-) and thioether (-S-) groups. Also included are substituted forms of the foregoing monovalent hydrocarbon groups in which one or more or even all hydrogen atoms are substituted by other substituents. Suitable substituents include C₁-C₆ alkoxy groups such as methoxy, ethoxy and (iso)propoxy; halogen atoms such as fluorine, chlorine, bromine and iodine; C₆-C₁₀ aryl groups such as phenyl and tolyl; C₇-C₁₀ aralkyl groups such as benzyl and phenethyl; and trialkylsilyl, trialkoxysilyl, dialkylmonoalkoxysilyl and monoalkyldialkoxysilyl groups in which each alkyl or alkoxy moiety has 1 to 6 carbon atoms.

R² is a substituted or unsubstituted C₂-C₂₀ divalent hydrocarbon group which may contain a heteroatom. Examples of the C₂-C₂₀ divalent hydrocarbon group include straight alkylene groups such as ethylene, trimethylene, tetramethylene, hexamethylene, octamethylene and decylene; branched alkylene groups such as propylene(methylethylene) and methyltrimethylene; cyclic alkylene groups such as cyclohexylene; alkenylene groups such as propenylene; arylene groups such as phenylene; and aralkylene groups such as methylenephenylene and methylenephenylenemethylene. Examples of the heteroatom-containing divalent hydrocarbon group include alkyleneoxyalkylene and alkylenethioalkylene groups. The alkylene moiety in these groups is independently as exemplified above for the straight, branched, cyclic alkylene groups.

Also included are substituted forms of the foregoing divalent hydrocarbon groups in which one or more or even all hydrogen atoms are substituted by substituents. Suitable substituents include C₁-C₆ alkoxy groups such as methoxy, ethoxy and (iso)propoxy; halogen atoms such as fluorine, chlorine, bromine and iodine; C₆-C₁₀ aryl groups such as phenyl and tolyl; C₇-C₁₀ aralkyl groups such as benzyl and phenethyl, and trialkylsilyl, trialkoxysilyl, dialkylmonoalkoxysilyl and monoalkyldialkoxysilyl groups in which each alkyl or alkoxy moiety has 1 to 6 carbon atoms.

R⁴ is an organosiloxane-containing group of the general formula (2).

-O-Si(R⁶)ₓ[(OSi(R⁶)₂)_{y}OSi(R⁶)₃]₍₃₋ₓ₎ (2)

Herein, R⁶ is each independently a monovalent hydrocarbon group of 1 to 10 carbon atoms, more preferably 1 to 6 carbon atoms, in which one or more or even all hydrogen atoms may be substituted by halogen atoms. The subscript x is 0, 1, 2 or 3, and a plurality of OSiR⁶₃ groups may undergo siloxane-eliminating condensation to form a cyclic siloxane when x is 0 or 1, and y is an integer of 0 to 30, preferably 0 to 20, and more preferably 5 to 15.

The C₁-C₁₀ monovalent hydrocarbon group may be straight, branched or cyclic. Examples include straight alkyl groups such as methyl, ethyl, propyl, butyl, pentyl, hexyl, heptyl, octyl and decyl; branched alkyl groups such as isopropyl, isobutyl, sec-butyl, tert-butyl, neopentyl, thexyl and 2-ethylhexyl; cyclic alkyl groups such as cyclopentyl and cyclohexyl; alkenyl groups such as allyl, propenyl, butenyl and pentenyl; aryl groups such as phenyl and tolyl; and aralkyl groups such as benzyl and phenethyl.

In formula (2), any combination of R⁶, x and y is acceptable.

Examples of the organosiloxane-containing group of formula (2) wherein R⁶, x, and y are as defined above include trialkylsiloxy groups such as trimethylsiloxy, triethylsiloxy, tert-butyldimethylsiloxy, triisopropylsiloxy and tert-butyldiphenylsiloxy; polyalkylpolysiloxane groups such as 1,1,1,3,3-pentamethyldisiloxy, 1,1,1,3,3,5,5-heptamethyltrisiloxy and 1,1,1,3,3,5,5,7,7-nonamethyltetrasiloxy; polyalkylcyclopolysiloxane groups such as 1,1,3,3,5-pentamethylcyclotrisiloxane, 1,1,3,3,5,5,7-heptamethylcyclotetrasiloxane and 1,1,3,3,5,5,7,7,9-nonamethylcyclopentasiloxane; and polyphenylpolysiloxane groups such as 3,5-diphenyl-1,1,1,3,5-pentamethyltrisiloxy, 1,1,1,3,5,7-hexamethyl-3,5,7-triphenyltetrasiloxane, 1,1,1,3,5,7,9-heptamethyl-3,5,7,9-tetraphenylpentasiloxane, 3,3,5,5-tetraphenyl-1,1,1-trimethyltrisiloxy, 3,3,5,5,7,7-hexaphenyl-1,1,1-trimethyltetrasiloxane and 3,3,5,5,7,7,9,9-octaphenyl-1,1,1-trimethylpentasiloxane.

In formula (1), p is 0 or 1, q is 1, 2 or 3, r is 0, 1, 2 or 3, and a and b are numbers in the range: 0 < a ≤ 1, 0 ≤ b ≤ 1, and a+b = 1.

The polysilazane compound should have a number average molecular weight (Mn) of 1,000 to 200,000, preferably 2,000 to 50,000. Mn is measured by GPC versus polystyrene standards under the following conditions.

| GPC conditions | |
|---|---|
| Analyzer: | LC-20AD (Shimadzu Corp.) |
| Column: | LF-404 (4.6 mm × 250 mm) (Shodex) |
| Eluent: | tetrahydrofuran |
| Flow rate: | 0.35 mL/min |
| Detector: | RI |
| Column oven temperature: | 40°C |
| Standards: | polystyrene |

Now the method for preparing the polysilazane compound is described. The polysilazane compound is prepared by effecting ammonolysis polymerization of a chlorosilane compound having the general formula (3) alone or by mixing the chlorosilane compound of formula (3) with a chlorosilane compound having the general formula (4) and effecting ammonolysis polymerization thereof. 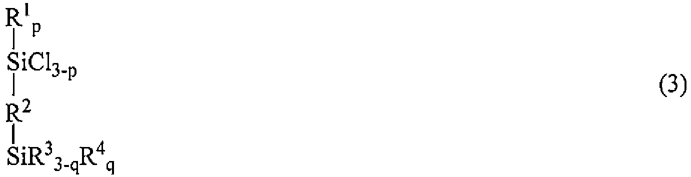 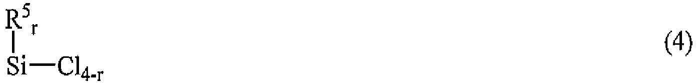 Herein R¹ to R⁵, p, q and r are as defined above.

Examples of the chlorosilane compound of formula (3) include 1-tris(trimethylsiloxy)silyl-2-trichlorosilylethane, 1-bis(trimethylsiloxy)methylsilyl-2-trichlorosilylethane, 1-trimethylsiloxydimethylsilyl-2-trichlorosilylethane, 1-tris(trimethylsiloxy)silyl-6-trichlorosilylhexane, 1-bis(trimethylsiloxy)methylsilyl-6-trichlorosilylhexane, 1-trimethylsiloxydimethylsilyl-6-trichlorosilylhexane, 1-tris(trimethylsiloxy)silyl-8-trichlorosilyloctane, 1-bis(trimethylsiloxy)methylsilyl-8-trichlorosilyloctane, 1-trimethylsiloxydimethylsilyl-8-trichlorosilyloctane, 1-tris(trimethylsiloxy)silyl-2-methyldichlorosilylethane, 1-bis(trimethylsiloxy)methylsilyl-2-methyldichlorosilylethane, 1-trimethylsiloxydimethylsilyl-2-methyldichlorosilylethane, 1-tris(trimethylsiloxy)silyl-6-methyldichlorosilylhexane, 1-bis(trimethylsiloxy)methylsilyl-6-methyldichlorosilylhexane, 1-trimethylsiloxydimethylsilyl-6-methyldichlorosilylhexane, 1-tris(trimethylsiloxy)silyl-8-methyldichlorosilyloctane, 1-bis(trimethylsiloxy)methylsilyl-8-methyldichlorosilyloctane, 1-trimethylsiloxydimethylsilyl-8-methyldichlorosilyloctane, 1-tris(1,1,1,3,3,5,5,7,7-nonamethyltetrasiloxy)silyl-2-trichlorosilylethane, 1-bis(1,1,1,3,3,5,5,7,7-nonamethyltetrasiloxy)methylsilyl-2-trichlorosilylethane, 1-(1,1,1,3,3,5,5,7,7,-nonamethyltetrasiloxy)dimethylsilyl-2-trichlorosilylethane 1-tris(1,1,1,3,3,5,5,7,7-nonamethyltetrasiloxy)silyl-6-trichlorosilylhexane, 1-bis(1,1,1,3,3,5,5,7,7-nonamethyltetrasiloxy)methylsilyl-6-trichlorosilylhexane, 1-(1,1,1,3,3,5,5,7,7-nonamethyltetrasiloxy)dimethylsilyl-6-trichlorosilylhexane, 1-tris(1,1,1,3,3,5,5,7,7-nonamethyltetrasiloxy)silyl-8-trichlorosilyloctane, 1-bis(1,1,1,3,3,5,5,7,7-nonamethyltetrasiloxy)methylsilyl-8-trichlorosilyloctane, 1-(1,1,1,3,3,5,5,7,7-nonamethyltetrasiloxy)dimethylsilyl-8-trichlorosilyloctane, and 1-(polydimethylpolysiloxy)dimethylsilyl-2-trichlorosilylethane.

Examples of the chlorosilane compound of formula (4) include tetrachlorosilane, methyltrichlorosilane, ethyltrichlorosilane, propyltrichlorosilane, hexyltrichlorosilane, cyclohexyltrichlorosilane, octyltrichlorosilane, decyltrichlorosilane, dodecyltrichlorosilane, hexadecyltrichlorosilane, octadecyltrichlorosilane, dimethyldichlorosilane, ethylmethyldichlorosilane, hexylmethyldichlorosilane, cyclohexylmethyldichlorosilane, octylmethyldichlorosilane, decylmethyldichlorosilane, dodecylmethyldichlorosilane, hexadecylmethyldichlorosilane, octadecylmethyldichlorosilane, trimethylchlorosilane, ethyldimethylchlorosilane, hexyldimethylchlorosilane, cyclohexyldimethylchlorosilane, octyldimethylchlorosilane, decyldimethylchlorosilane, dodecyldimethylchlorosilane, hexadecyldimethylchlorosilane, octadecyldimethylchlorosilane, diethyldichlorosilane, dibutyldichlorosilane, diisopropyldichlorosilane, dicyclopentyldichlorosilane, triethylchlorosilane, tert-butyldimethylchlorosilane, triisopropylchlorosilane, and tert-butyldiphenylchlorosilane.

The chlorosilane compound of formula (3) and the chlorosilane compound of formula (4) may be combined in any desired ratio. Preferably the compound of formula (4) is used in an amount of 0 to 10 moles, more preferably 0 to 3 moles per mole of the compound of formula (3).

The ammonolysis polymerization is carried out by feeding ammonia to the chlorosilane compound of formula (3) or to a mixture of the chlorosilane compound of formula (3) and the chlorosilane compound of formula (4). Although the ammonolysis polymerization may take place in a solventless system, a solvent is preferably used because ammonium chloride forms as by-product with the progress of reaction to interfere with stirring. Examples of the solvent include hydrocarbon solvents such as pentane, hexane, cyclohexane, isooctane, benzene, toluene and xylene; ether solvents such as diethyl ether, tetrahydrofuran, 4-methyltetrahydropyran, cyclopentyl methyl ether and dioxane; ester solvents such as ethyl acetate, isopropyl acetate and butyl acetate; aprotic polar solvents such as acetonitrile and N,N-dimethylformamide; chlorinated hydrocarbon solvents such as dichloromethane and chloroform; siloxane solvents such as hexamethyldisiloxane, tris(trimethylsiloxy)methylsilane, octamethylcyclotetrasiloxane and decamethylcyclopentasiloxane, which may be used alone or in admixture.

The ammonolysis polymerization may take place either in the presence or absence of a catalyst. The reaction time may be reduced by adding a catalyst. Examples of the catalyst include Bronsted acids such as methanesulfonic acid, benzenesulfonic acid, dodecylbenzenesulfonic acid, trifluoromethanesulfonic acid, acetic acid, propionic acid, benzoic acid and trifluoroacetic acid. Although the amount of the catalyst added is not particularly limited, it is preferably 0.001 to 0.1 mole, more preferably 0.005 to 0.1 mole per mole of the compound of formula (3).

The reaction temperature is preferably in a range of 0 to 200°C, more preferably 10 to 100°C, and even more preferably 10 to 50°C though not limited thereto. The reaction time is preferably 30 minutes to 24 hours, more preferably 3 to 15 hours. Although the reaction atmosphere is not particularly limited, an inert gas atmosphere such as nitrogen or argon is preferred for safety.

At the end of reaction, the reaction solution is subjected to filtration or separatory operation. The salt, ammonium chloride is dissolved and removed, whereupon the target polysilazane compound is recovered. Preferably, the salt is separated by dissolving it in an alkaline aqueous solution, because higher yields are expectable. Suitable alkaline components used herein include alkali metal hydroxides such as lithium hydroxide, sodium hydroxide and potassium hydroxide; and alkaline earth metal hydroxides such as calcium hydroxide. The alkaline component such as an alkali metal hydroxide is preferably used in an amount of 1 to 2 moles, more preferably 1 to 1.5 moles per mole of the ammonium chloride byproduct.

Now the water repellent agent of the invention is described. The water repellent agent is defined as comprising the polysilazane compound described above. The water repellent agent may be the polysilazane compound alone or further contain a solvent. The solvent is as exemplified above for the solvent used in the reaction. The amount of the solvent is not particularly limited. Preferably the solvent is used in such amounts that the concentration of the polysilazane compound may be 0.01 to 50% by weight, more preferably 0.1 to 10% by weight, and even more preferably 1 to 5% by weight.

Also the water repellent agent may contain a catalyst. Suitable catalysts include titanium base catalysts, for example, tetraalkyl orthotitanates such as tetrabutyl orthotitanate, tetramethyl orthotitanate, tetraethyl orthotitanate and tetrapropyl orthotitanate, and partial hydrolyzates thereof, aluminum base catalysts such as aluminum trihydroxide, aluminum alcoholate, aluminum acylate, aluminum acylate salts, aluminosiloxy compounds and aluminum metal chelate compounds, tin base catalysts such as dioctyltin dioctoate and dioctyltin dilaurate, and zinc base catalysts such as zinc octylate and zinc 2-ethylhexanoate. The amount of the catalyst is not particularly limited. Preferably it is used in an amount of 0.01 to 10% by weight, more preferably 0.1 to 5% by weight of the agent.

The water repellent agent may contain one or more other additives selected from pigments, defoamers, lubricants, antiseptics, pH control agents, film formers, antistatic agents, anti-fungus agents, dyes and the like as long as the benefits of the invention are not impaired.

Below the water repellent treatment method using the water repellent agent is described. The water repellent agent is applied to a member to treat the member surface so as to be water repellent.

The member to be treated may be of either inorganic materials or organic materials.

Examples of the inorganic materials include metal plates, glass plates, metal fibers, glass fibers, powder silica, powder alumina, powder talc, and powder calcium carbonate. Suitable glass is a common type glass, for example, E glass, C glass or quartz glass. Quartz glass may also be used as a mold material in nanoimprint technology and the like. Glass fibers may be used as assemblies, for example, bundles, twisted yarns, and woven fabrics of glass filaments having a diameter of 3 to 30 µm.

Examples of the organic material include rubber, paper, and natural fibers such as cellulose.

Water repellent treatment with the water repellent agent may be performed by any commonly used methods. Specifically, the water repellent agent may be coated as such or after dilution with a solvent to the surface of a member, and then dried. The coating technique is not particularly limited. Various well-known coating techniques such as brush coating, spray coating, wire bar coating, blade coating, roll coating, and dipping may be used.

In another mode, the water repellent agent may be contacted with a member by carrying the agent on an inert gas and bringing the gas in contact with the member. Alternatively, the water repellent agent may be directly mixed with a member using a mixer or mill.

Drying after water repellent treatment may also be performed under any desired conditions. The drying step may be performed at room temperature or elevated temperature, preferably at elevated temperature. The drying temperature is not particularly limited as long as the member is not adversely affected, although a temperature of about 50°C to about 150°C is typical.

### EXAMPLE

Examples of the invention are given below by way of illustration and not by way of limitation. Mw and Mn are weight and number average molecular weights, respectively, as measured by GPC, and Mw/Mn is a polydispersity index. Me stands for methyl and TMS for trimethylsilyl.

### Synthesis of polysilazane

### Example 1-1

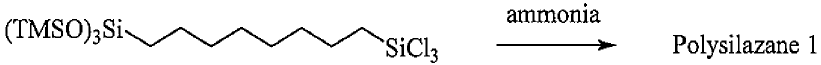

A flask equipped with a stirrer, reflux condenser, inlet tube and thermometer was charged with 108.6 g of 1-tris(trimethylsiloxy)silyl-8-trichlorosilyloctane as a chlorosilane compound and 100.8 g of toluene. Ammonia was blown into the reaction solution which was kept below 60°C. After the distillation of ammonia at the top of the reflux condenser was confirmed, the reaction solution was stirred for another one hour at room temperature. A mixture of 100.9 g of 25 wt% sodium hydroxide and 60.0 g of water was added to the resulting reaction solution, which was stirred for 2 hours. At this point, the reaction solution separated into two layers. After removal of the lower layer, the upper layer was concentrated, yielding 89.9 g of a reaction product.

On IR analysis, the peaks at 3,387 cm⁻¹ assigned to NH and at 941 cm⁻¹ assigned to Si-N-Si were observed. On GPC analysis, the reaction product had a Mw of 6,947, a Mn of 6,208, and a Mw/Mn of 1.190. These data attested formation of Polysilazane 1.

### Example 1-2

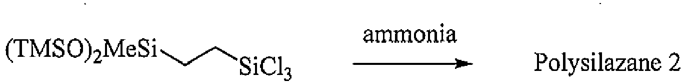

A flask equipped with a stirrer, reflux condenser, inlet tube and thermometer was charged with 38.3 g (0.0997 mol) of 1-bis(trimethylsiloxy)methylsilyl-2-trichlorosilylethane as a chlorosilane compound and 52.0 g of toluene. Ammonia was blown into the reaction solution which was kept below 60°C. After the distillation of ammonia at the top of the reflux condenser was confirmed, the reaction solution was stirred for another one hour at room temperature. The resulting reaction solution was filtered to separate the ammonium chloride byproduct. The filtrate was concentrated, yielding 26.1 g of a reaction product.

On IR analysis, the peaks at 3,393 cm⁻¹ assigned to NH and at 1,033 cm⁻¹ assigned to Si-N-Si were observed. On GPC analysis, the reaction product had a Mw of 2,245, a Mn of 2,394, and a Mw/Mn of 1.07. These data attested formation of Polysilazane 2.

### Example 1-3

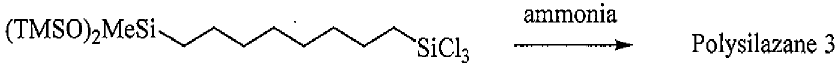

Reaction was performed as in Example 1-1 except that the chlorosilane compound was replaced by 37.5 g of 1-bis(trimethylsiloxy)methylsilyl-8-trichlorosilyloctane, the amount of toluene was changed to 62.2 g, and a mixture of 40.0 g of 25 wt% sodium hydroxide and 23.8 g of water was used. There was obtained 29.7 g of a reaction product.

On IR analysis, the peaks at 3,388 cm⁻¹ assigned to NH and at 940 cm⁻¹ assigned to Si-N-Si were observed. On GPC analysis, the reaction product had a Mw of 4,268, a Mn of 3,622, and a Mw/Mn of 1.162. These data attested formation of Polysilazane 3.

### Example 1-4

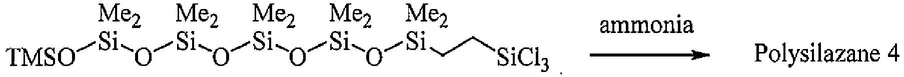

Reaction was performed as in Example 1-1 except that the chlorosilane compound was replaced by 26.7 g of 1-(1,1,1,3,3,5,5,7,7-nonamethyltetrasiloxy)dimethylsilyl-2-trichlorosilylethane, the amount of toluene was changed to 36.4 g, and a mixture of 25.3 g of 25 wt% sodium hydroxide and 15.2 g of water was used. There was obtained 21.1 g of a reaction product.

On IR analysis, the peaks at 3,393 cm⁻¹ assigned to NH and at 943 cm⁻¹ assigned to Si-N-Si were observed. On GPC analysis, the reaction product had a Mw of 2,150, a Mn of 2,043, and a Mw/Mn of 1.052. These data attested formation of Polysilazane 4.

### Example 1-5

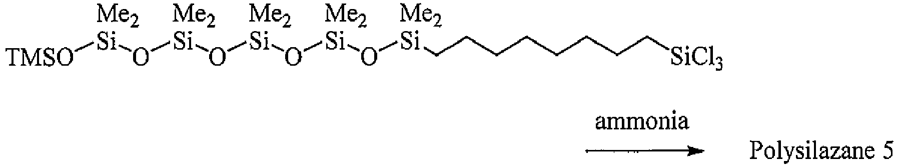

Reaction was performed as in Example 1-1 except that the chlorosilane compound was replaced by 44.8 g of 1-(1,1,1,3,3,5,5,7,7-nonamethyltetrasiloxy)dimethylsilyl-8-trichlorosilyloctane, the amount of toluene was changed to 58.4 g, and a mixture of 36.3 g of 25 wt% sodium hydroxide and 21.5 g of water was used. There was obtained 38.1 g of a reaction product.

On IR analysis, the peaks at 3,388 cm⁻¹ assigned to NH and at 957 cm⁻¹ assigned to Si-N-Si were observed. On GPC analysis, the reaction product had a Mw of 8,309, a Mn of 7,382, and a Mw/Mn of 1.126. These data attested formation of Polysilazane 5.

### Example 1-6

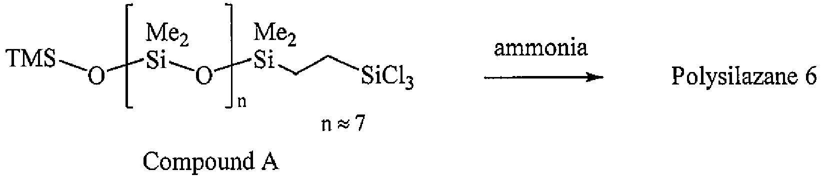

Reaction was performed as in Example 1-2 except that the chlorosilane compound was replaced by 30.2 g of Compound A, and the amount of toluene was changed to 24.0 g. There was obtained 25.1 g of a reaction product.

On IR analysis, the peaks at 3,390 cm⁻¹ assigned to NH and at 1,013 cm⁻¹ assigned to Si-N-Si were observed. On GPC analysis, the reaction product had a Mw of 8,674, a Mn of 6,531, and a Mw/Mn of 1.328. These data attested formation of Polysilazane 6.

### Glass surface treatment

### Examples 2-1 to 2-6

A toluene solution containing 3 wt% of each polysilazane compound in Examples 1-1 to 1-6 was prepared. A slide glass (76 mm × 26 mm, by Matsunami Glass Ind., Ltd.) which had been exposed to UV/ozone for 10 minutes was immersed in the toluene solution for one day to treat the glass with the polysilazane compound. Then, the slide glass was immersed in toluene where it was ultrasonically cleaned for 30 minutes to remove the excess deposit of polysilazane compound. Next, the slide glass was immersed in water where it was ultrasonified for 15 minutes to hydrolyze the polysilazane compound. Afterward the slide glass was dried in an oven at 150°C for one hour and allowed to stand at room temperature for one hour, obtaining a sample.

### Comparative Example 1

A sample was formed by the same procedure as in Example 2-1 except that the toluene solution containing 3 wt% of polysilazane compound was replaced by a composition containing 3 wt% of decyltrimethoxysilane, which was prepared by mixing 1.71 g of decyltrimethoxysilane, 44 g of ethanol, and 13 g of water with 80 ppm nitric acid and stirring for 2 hours.

The samples in Examples 2-1 to 2-6 and Comparative Example 1 were measured for a contact angle with 1 µL of water and a sliding angle with 20 µL of water using a contact angle meter (Kyowa Interface Science Co., Ltd.). The results are shown in Table 1.

**Table 1**

| | Polysilazane compound | Contact angle (°) | Sliding angle (°) |
|---|---|---|---|
| Example 2-1 | Polysilazane 1 | 106 | 11 |
| Example 2-2 | Polysilazane 2 | 102 | 12 |
| Example 2-3 | Polysilazane 3 | 108 | 10 |
| Example 2-4 | Polysilazane 4 | 106 | 11 |
| Example 2-5 | Polysilazane 5 | 105 | 8 |
| Example 2-6 | Polysilazane 6 | 106 | 6 |
| Comparative Example 1 | hydrolyzate of decyltrimethoxysilane | 100 | 17 |

As seen from Table 1, the slide glass samples treated with the polysilazane compounds within the scope of the invention had a greater contact angle than the slide glass treated with the decyltrimethoxysilane hydrolyzate in Comparative Example 1, indicating high water repellency. A comparison of Example 2-2 with Comparative Example 1 reveals that their difference in contact angle is slight, but the sliding angle of Example 2-2 is quite smaller, demonstrating the effect of introducing a siloxane structure. Comparative Example 1 using decyltrimethoxysilane required preparation of its hydrolyzate solution prior to water repellent treatment. In contrast, the inventive polysilazane compounds required only dilution prior to water repellent treatment, demonstrating that water repellent treatment is performed in a simple way.

Although some preferred embodiments have been described, many modifications and variations may be made thereto in light of the above teachings. It is therefore to be understood that the invention may be practiced otherwise than as specifically described without departing from the scope of the appended claims.

## Claims

1. A polysilazane compound comprising recurring units of the general formula (1) and having a number average molecular weight of 1,000 to 200,000 as measured by gel permeation chromatography versus polystyrene standards, 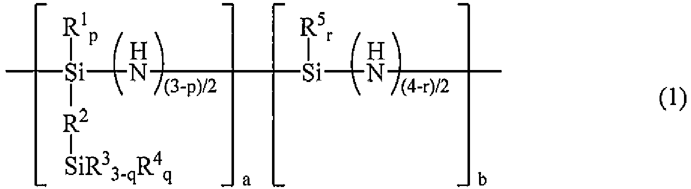 wherein R¹, R³ and R⁵ are each independently a substituted or unsubstituted C₁-C₂₀ monovalent hydrocarbon group which may contain a heteroatom, R² is a substituted or unsubstituted C₂-C₂₀ divalent hydrocarbon group which may contain a heteroatom, R⁴ is an organosiloxane-containing group of the general formula (2):
-O-Si(R⁶)ₓ[(OSi(R⁶)₂)_{y}OSi(R⁶)₃]₍₃₋ₓ₎ (2)
wherein R⁶ is each independently a C₁-C₁₀ monovalent hydrocarbon group which may be substituted with halogen, x is 0, 1, 2 or 3, a plurality of OSiR⁶₃ groups may undergo siloxane-eliminating condensation to form a cyclic siloxane when x is 0 or 1, and y is an integer of 0 to 30, p is 0 or 1, q is 1, 2 or 3, r is 0, 1, 2 or 3, a is a number from more than 0 to 1, b is a number from 0 to 1, and a+b is equal to 1.

2. A method for preparing the polysilazane compound of claim 1, comprising the step of effecting ammonolysis polymerization of a chlorosilane compound having the general formula (3) alone: 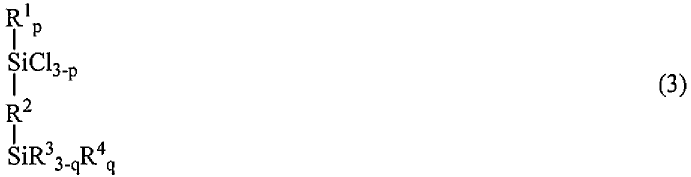 wherein R¹ to R⁴, p and q are as defined above, or the steps of mixing a chlorosilane compound having the above formula (3) with a chlorosilane compound having the general formula (4): 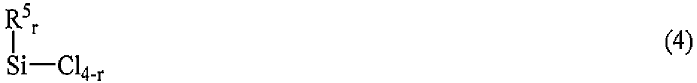 wherein R⁵ and r are as defined above, and effecting ammonolysis polymerization thereof.

3. The method of claim 2, comprising the steps of adding an alkaline aqueous solution after the ammonolysis polymerization and effecting separatory operation.

4. A water repellent agent comprising the polysilazane compound of claim 1.

5. The water repellent agent of claim 4, further comprising a solvent.

6. The water repellent agent of claim 4 or 5, further comprising a catalyst.

7. A water repellent treatment method comprising the step of applying the water repellent agent of any one of claims 4 to 6 to a member to treat its surface, wherein the applying step includes coating, contacting or mixing.

## Patentansprüche

1. Polysilazanverbindung, umfassend wiederkehrende Einheiten der allgemeinen Formel (1) und mit einem zahlenmittleren Molekulargewicht von 1.000 bis 200.000, gemessen durch Gelpermeationschromatographie gegenüber Polystyrol-Standards, 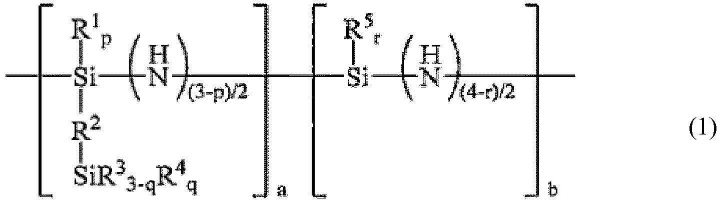 worin R¹, R³ und R⁵ jeweils unabhängig eine substituierte oder unsubstituierte, einwertige C₁-C₂₀-Kohlenwasserstoffgruppe, die ein Heteroatom enthalten kann, sind, R² eine substituierte oder unsubstituierte, zweiwertige C₂-C₂₀-Kohlenwasserstoffgruppe, die ein Heteroatom enthalten kann, ist, R⁴ eine organosiloxanhaltige Gruppe der allgemeinen Formel (2) ist:
-O-Si(R⁶)ₓ[(OSi(R³)₂)_{y}OSi(R⁶)₃]₍₃₋ₓ₎ (2)
worin R⁶ jeweils unabhängig eine einwertige C₁-C₁₀-Kohlenwasserstoffgruppe ist, die mit Halogen subsituiert sein kann, x 0, 1, 2 oder 3 ist, eine Vielzahl von OSiR⁶₃-Gruppen einer Siloxan-eliminierenden Kondensation unterliegen kann, um ein zyklisches Siloxan zu bilden, wenn x 0 oder 1 ist, und y eine ganze Zahl von 0 bis 30 ist, p 0 oder 1 ist, q 1, 2 oder 3 ist, r 0, 1, 2 oder 3 ist, a eine Zahl von mehr als 0 bis 1 ist, b eine Zahl von 0 bis 1 ist, und a+b gleich 1 ist.

2. Verfahren zur Herstellung der Polysilazanverbindung nach Anspruch 1, umfassend den Schritt des Bewirkens einer Ammonolysepolymerisation einer Chlorosilanverbindung mit der allgemeinen Formel (3) alleine: 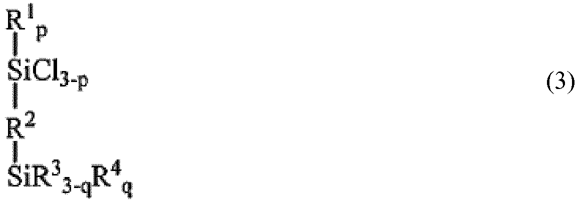 worin R¹ bis R⁴, p und q wie oben definiert sind, oder die Schritte des Mischens einer Chlorsilanverbindung mit der obigen Formel (3) mit einer Chlorsilanverbindung mit der allgemeinen Formel (4): 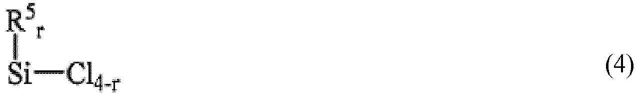 worin R⁵ und r wie oben definiert sind, und Bewirkens einer Ammonolysepolymerisation hiervon.

3. Verfahren nach Anspruch 2, umfassend die Schritte des Zugebens einer alkalischen wässrigen Lösung nach der Ammonolysepolymerisation und des Bewirkens einer Trennungsoperation.

4. Wasserabweisendes Mittel, umfassend die Polysilazanverbindung nach Anspruch 1.

5. Wasserabweisendes Mittel nach Anspruch 4, weiterhin umfassend ein Lösungsmittel.

6. Wasserabweisendes Mittel nach Anspruch 4 oder 5, weiterhin umfassend einen Katalysator.

7. Wasserabweisendes Behandlungsverfahren, umfassend den Schritt des Aufbringens des wasserabweisenden Mittels nach irgendeinem der Ansprüche 4 bis 6 auf ein Element, um dessen Oberfläche zu behandeln, wobei der Aufbringungsschritt Beschichten, Kontaktieren oder Mischen beinhaltet.

## Revendications

1. Composé polysilazane comprenant des unités répétitives de la formule générale (1) et ayant une masse moléculaire moyenne en nombre de 1000 à 200000, telle que mesurée par chromatographie par perméation de gel versus étalons de polystyrène, 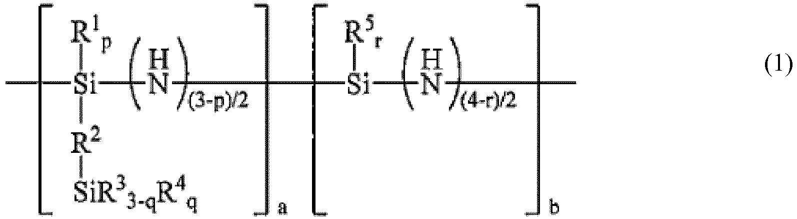 dans laquelle R¹, R³ et R⁵ sont chacun indépendamment un groupe hydrocarboné monovalent en C₁-C₂₀ substitué ou non substitué, qui peut contenir un hétéroatome, R² est un groupe hydrocarboné divalent en C₂-C₂₀ substitué ou non substitué, qui peut contenir un hétéroatome, R⁴ est un groupe à teneur en organosiloxane de la formule générale (2) :
**-O-Si(R⁶)ₓ[(OSi(R⁶)₂)_{y}OSi(R⁶)₃]₍₃₋ₓ₎** (2)
dans laquelle les R⁶ représentent chacun indépendamment un groupe hydrocarboné monovalent en C₁-C₁₀ qui peut être substitué par halogène, x est 0, 1, 2 ou 3, une pluralité de groupes OSiR⁶₃ peut subir une condensation d'élimination de siloxane pour former un siloxane cyclique lorsque x est 0 ou 1, et y est un entier de 0 à 30, p est 0 ou 1, q est 1, 2 ou 3, r est 0, 1 , 2 ou 3, a est un nombre de plus de 0 à 1, b est un nombre de 0 à 1 et a + b est égal à 1.

2. Procédé de préparation du composé polysilazane selon la revendication 1, comprenant l'étape de réalisation d'une polymérisation par ammonolyse d'un composé chlorosilane ayant la formule générale (3) seule : 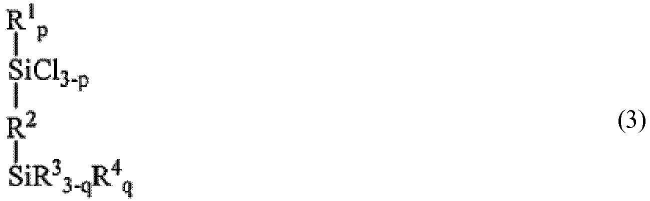 dans laquelle R¹ à R⁴, p et q sont tels que définis ci-dessus, ou les étapes de mélange d'un composé chlorosilane ayant la formule ci-dessus (3) avec un composé chlorosilane ayant la formule générale (4) : 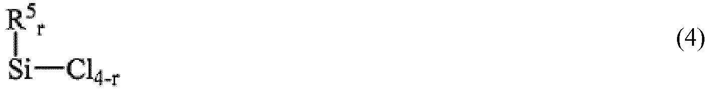 dans laquelle R⁵ et r sont tels que définis ci-dessus, et de réalisation d'une polymérisation par ammonolyse de ceux-ci.

3. Procédé selon la revendication 2, comprenant les étapes d'addition d'une solution aqueuse alcaline après la polymérisation par ammonolyse et de réalisation d'une opération de séparation.

4. Agent hydrofuge comprenant le composé polysilazane selon la revendication 1.

5. Agent hydrofuge selon la revendication 4, comprenant en outre un solvant.

6. Agent hydrofuge selon l'une des revendications 4 ou 5, comprenant en outre un catalyseur.

7. Procédé de traitement hydrofuge comprenant l'étape d'application de l'agent hydrofuge selon l'une quelconque des revendications 4 à 6 sur un élément pour traiter sa surface, dans lequel l'étape d'application comprend une application en revêtement, une mise en contact ou un mélange.
